(19) **Europäisches Patentamt**
**European Patent Office**
**Office européen des brevets**

(11) **EP 4 711 990 A1**

(12) **EUROPEAN PATENT APPLICATION**

(43) Date of publication:
**18.03.2026  Bulletin 2026/12**

(51) International Patent Classification (IPC):
**G06N 20/00** (2019.01)

(21) Application number: **24215379.9**

(22) Date of filing: **26.11.2024**

(52) Cooperative Patent Classification (CPC):
**G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.09.2024  EP 24200889**

(71) Applicant: **AUMOVIO Germany GmbH
60488 Frankfurt am Main (DE)**

(72) Inventors:
• **Kassem Sbeyti, Moussa
30175 Hannover (DE)**
• **Nowzad, Azarm
30175 Hannover (DE)**
• **Wirth, Christian
30175 Hannover (DE)**

(74) Representative: **Aumovio Corporation
AUMOVIO Germany GmbH
Taunusstraße 36
80807 München (DE)**

(54) **A METHOD, APPARATUS, AND COMPUTER-READABLE MEDIUM FOR CORRECTING GROUND TRUTH LABELS IN TRAINING DATASETS**

(57)     Embodiments of the present disclosure relate to a method for correcting ground truth labels used in training a machine learning model for a computer vision task. A training method and ground truth labels used for training a machine learning model are also disclosed. A machine learning model, a computer program, a computer-readable data carrier and an apparatus are also presented. The method for correcting ground truth labels comprises obtaining sample images and ground truth labels for the sample images, training the machine learning model using the sample images and the ground truth labels, modifying the sample images, obtaining, by the machine learning model, predicted labels for the modified sample images, and correcting the ground truth labels based on a comparison of the ground truth labels with the predicted labels.

100

```
┌─────────────────────────────────────────────────┐
│ Obtaining information on a frequency of occurrence of │── 110
│         object classes in the training dataset         │
└─────────────────────────────────────────────────┘
                         │
                         ▼
┌─────────────────────────────────────────────────┐
│ Cutting out, based on the frequency of occurrence, objects │── 120
│   from sample images taken from the training dataset    │
└─────────────────────────────────────────────────┘
                         │
                         ▼
┌─────────────────────────────────────────────────┐
│     Generating, based on the frequency of occurrence,    │── 130
│  training data comprising a collage of at least two of the │
│                         objects                          │
└─────────────────────────────────────────────────┘
```

Fig. 1

Processed by Luminess, 75001 PARIS (FR)

## Description

The present disclosure relates to machine learning. Specifically, the present disclosure relates to correcting ground truth labels in training datasets used for training machine learning models.

Despite significant advancements in object detection, the development of robust and accurate object detectors remains challenging, particularly when dealing with real-world scenarios, such as autonomous driving, where labeled data is limited and costly to obtain. In such scenarios, semi-supervised learning (SSL) has gained traction as a promising approach to leverage both labeled and unlabeled data, thereby reducing the dependence on large, labeled datasets.

SSL methods, especially those employing the student-teacher paradigm, have shown considerable promise in object detection tasks. In these approaches, the teacher model generates pseudo-labels for the unlabeled data, which are then used to train the student model. However, the efficacy of SSL is often hampered by several key challenges: the quality of pseudo-labels, the presence of class imbalance, and the inherent noise in both labeled and pseudo-labeled data.

First, the generation of high-quality pseudo-labels is crucial, as noisy or incorrect labels can mislead the student model and degrade performance. This issue is exacerbated in complex environments, such as autonomous driving, where variations in lighting, occlusion, and object appearance are common. Second, class imbalance where certain classes are underrepresented, poses a significant challenge in ensuring that the model can generalize well across all object categories, thereby failing to accurately detect underrepresented classes or becoming biased towards specific classes. Finally, the noise in labels, whether due to missing annotations or inaccuracies in pseudo-labels, further complicates the training process, potentially leading to suboptimal model performance.

Hence, there is a need to enhance current machine learning techniques to address said challenges in order to improve the quality of pseudo-labels, and to enhance the representation of underrepresented (i.e. minority) classes, ensuring that the model is exposed to a more balanced distribution of objects, thereby improving object detection and recognition. In addition, it is desirable to mitigate the effects of noisy or missing annotations.

According to a first aspect of the invention, there is provided a method for correcting ground truth labels used in training a machine learning model for a computer vision task, the method comprising: obtaining sample images and ground truth labels for the sample images; training the machine learning model using the sample images and the ground truth labels; modifying the sample images; obtaining, by the machine learning model, predicted labels for the modified sample images; and correcting the ground truth labels based on a comparison of the ground truth labels with the predicted labels.

By modifying the sample images, for instance using image augmentation, and by obtaining predicted labels for the modified sample images (not previously seen by the machine learning model), for instance using the machine learning model during inference-time to obtain respective predicted labels for the modified sample images, erroneous, missing or noisy ground truth labels can be identified and corrected, thereby considerably minimizing the occurrence of erroneous, missing and noisy labels in the training data, hence improving the reliability and accuracy of the training data, and also improving the reliability and accuracy of the performance (e.g. object detection and recognition) of the machine learning model trained using said training data.

In some embodiments, the ground truth and predicted labels are indicative of a position and/or dimensions of an object, an absence of an object, and/or presence of an object, wherein the method according to the first aspect of the invention further comprises obtaining a deviation of the ground truth labels from the predicted labels, and wherein correcting the ground truth labels comprises correcting the ground truth labels based on the deviation.

According to a second aspect of the invention, there are provided ground truth labels obtainable by a method according to the first aspect of the invention.

The ground truth labels obtained by the method according to the first aspect of the invention improve the accuracy and reliability of the training data, since they considerably minimize the occurrence of false, missing and noisy labels, as previously explained. Accordingly, said ground truth labels improve the accuracy and reliability of the training data. In addition, said ground truth labels have the intended technical use of training a machine learning model for a computer vision task that includes object detection and recognition. When used in training the machine learning model for the computer vision task, said ground truth labels cause the technical effect of a more accurate and reliable object detection and recognition performed by said machine learning model.

According to a third aspect of the invention, there is provided a training method for training a machine learning model for a computer vision task, the training method comprising: obtaining training data including ground truth labels according to the second aspect of the invention; and training the machine learning model based on the training data.

Since the training data used in training the machine learning model exhibits a minimum occurrence of false, missing and noisy labels, as explained above, the machine learning model trained using said data is more effective, reliable, and accurate. In addition, the training method causes the effect that the obtained machine learning model minimizes overfitting, underfitting, and bias, and is characterized by an improved generalization and consistent predictions. According to fourth aspect of the invention, there is provided a machine learning model obtainable by a training method according to the third aspect of the invention. Given that the machine learning model has the technical purpose of being used in a computer vision task (e.g. object detection, recognition, localization, and/or classification), and since the training method used to train said model causes the effect that the machine learning model obtained after training minimizes overfitting, underfitting, and bias, and is characterized by an improved generalization and consistent predictions, said machine learning model is characterized by an improved reliability and accuracy when used to perform the computer vision task. According to a fifth aspect of the invention, there is provided a computer program comprising instructions which, when the computer program is executed by a computer, cause the computer to i) carry out the method according to the first aspect of the invention, and/or ii) carry out the method according to the third aspect of the invention, and/or iii) provide ground truth labels according to the second aspect of the invention, and/or iv) provide a machine learning model according to the fourth aspect of the invention.

According to a further aspect of the invention, there is provided a computer-readable data carrier having stored thereon the computer program according to the fifth aspect of the invention.

According to a further aspect of the invention, there is provided an apparatus comprising: one or more interfaces for communication; and a data processing circuit configured to i) carry out the method according to the first aspect of the invention, and/or ii) carry out the method according to the third aspect of the invention, and/or iii) provide ground truth labels according to the second aspect of the invention, and/or iv) provide a machine learning model according to the fourth aspect of the invention.

According to a further aspect of the present invention, there is provided a use of the data of the second aspect of the invention. According to a further aspect of the invention there is provided a use of the machine learning model of the fourth aspect of the invention.

Examples will now be further described with reference to the figures in which:

Fig. 1 shows a flow diagram illustrating a computer-implemented method 100 for generating training data used in training a machine learning model.

Fig. 2 shows a schematic illustrating the steps of generating a collage 250 according to method 100.

Fig. 3 shows a flow chart schematically illustrating an embodiment of a computer-implemented method 300 for correcting ground truth labels for training a machine learning model for a computer vision task.

Fig. 4 shows a flow chart schematically illustrating an embodiment of a computer-implemented method 400 for generating a balanced training dataset used in training a machine learning model for a computer vision task.

Fig. 5 shows a flow chart schematically illustrating an embodiment of a computer-implemented method 500 for filtering pseudo-labels used in a training dataset used in training a machine learning model for a computer vision task.

Figure 6 schematically illustrates a block diagram of an embodiment of an apparatus 600 to execute the methods described herein.

Detailed Description

The quality of both ground truth and pseudo-labels is paramount for effective model training. Label noise, including missing detections and incorrect labels, can severely degrade model performance. While significant progress has been made in the areas of semi-supervised learning (SSL), class imbalance handling, and label refinement remain challenging, particularly in balancing the trade-offs between precision and recall, managing noise in pseudo-labels, and ensuring robust autonomous driving scenarios.

In autonomous driving, while SSL is critical due to high labeling costs and abundant unlabeled data, there has been little real analysis of the potential of pseudo-labels and how to effectively utilize them. For instance, some studies explore uncertainty-based methods for generating pseudo-labels and domain adaptation, but comprehensive evaluations of pseudo-label efficacy in SSL are still lacking. Some studies demonstrate improvements by combining consistency-based methods with pseudo-labeling, however, the broader potential of pseudo-labels in semi-supervised object detection remains underexplored, particularly regarding their optimal utilization in variable driving environments.

Strong class imbalance in real-world data leads to a non-uniform distribution of classes across the batches. This leads to peaks in the gradient updates as a rare class may appear in only one batch, resulting in that the model will be biased and will not be focusing on the rare class. Therefore, there is need to improve the generalization of the model across both common and rare classes by exposing it to a balanced and more diverse set of training data and conditions.

Pseudo-Label Selection (PLS) is a method for filtering and optimizing the pseudo-labels generated by the teacher model. For instance, given a set of unlabeled objects or unlabeled training dataset and a set of labeled training dataset, the teacher model generates pseudo-labels for the unlabeled training dataset. The pseudo-labels are then used to train the student model. The quality of these pseudo-labels is critical for the overall performance of the SSL framework. The post-processing of anchor-based object detectors such as YOLO, SSD, and EfficientDet typically consist of taking in the model output which is the anchor offsets, and hence there will be as many detections as there are pre-defined anchors, and apply non-maximum suppression (NMS) on them. NMS could be either a standard NMS or a soft-NMS. In the standard NMS, the detections are filtered partly based on the score threshold. In the soft-NMS the score is adjusted but no detections are filtered out, therefore the score threshold is defined afterwards. To avoid erroneous labels, a threshold between 0.4 to 0.9 is usually used for pseudo-labels. The main challenge however remains in measuring the missing detection rate post-filtering as many images could now result in a negative signal due to the background-foreground mistakes. For that, a metric is need that estimates the missed detection rate of images based on the behavior of the detections at different scores.

In summary, the limitations of SSL may be described as follows: (1) The unlabeled data are assumed to have high quality, however, in practice unlabeled data contains noise or outliers, and this negatively affects the model performance. (2) Dataset imbalance: The ratio of labeled to unlabeled data influences the model performance. Also, the imbalanced occurrence of each object class in a dataset influences the model performance. For example, nearly 80% of the labeled objects are cars in the database KITTI (Karlsruhe Institute of Technology and Toyota Technological Institute). (3) Sensitivity to labels: Performance also highly depends on the initially selected labeled data, also leading to inconsistent results said data contains errors. (4) Computational complexity: Approaches such as teacher-student can be computationally expensive, especially when dealing with large unlabeled datasets. This can limit their practicality for certain applications.

It is one object of the present disclosure to provide an improved solution for the above-mentioned limitations through advanced techniques that improve the representation of underrepresented classes, ensuring a more balanced training process, that improve training for challenging scenarios using both original and augmented data, that filter pseudo-labeled images based on the estimation of a missing label portion, and/or that refine noisy and missing annotations by leveraging inference-time augmentation and model prediction on the training dataset, leading to more accurate ground truth labels. In addition, it is another object of the present invention to build a robust object detector and classifier that perform well in scenarios where labeled data is scarce and unlabeled data is abundant, like for instance in autonomous driving scenarios.

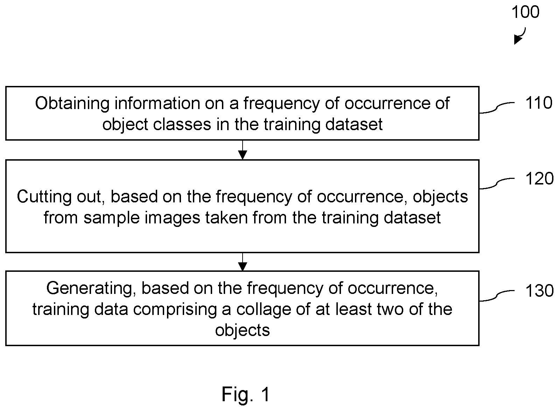

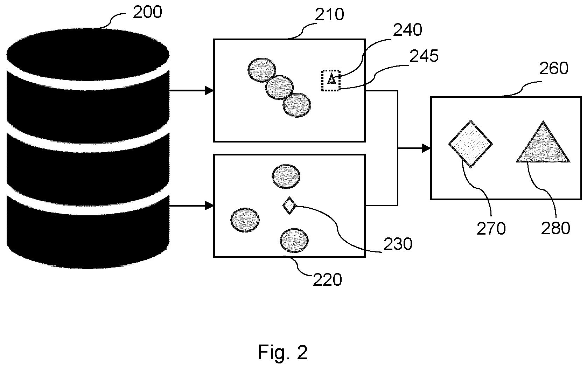

Fig. 1 shows a flow chart schematically illustrating an embodiment of a computer-implemented method 100 for generating training data comprising a collage 250 for a training dataset 200 used in training a machine learning model for a computer vision task. Fig. 2 shows a schematic illustrating the steps of generating training data comprising a collage 250 used in balancing the training dataset 200.

In embodiments, the training dataset 200 may be an imbalanced (or unbalanced) training dataset. For instance, the classes (or object classes) in the training dataset are not represented equally in the training dataset, or said classes do not have the same (or similar or corresponding or equivalent) frequency of occurrence within the training dataset. For instance, some classes in the training dataset may be underrepresented. This means that one or more classes (also called the majority class(es)) in the training dataset has significantly more instances than the one or more other classes (also called the minority class(es)).

For instance, to determine that a training dataset 200 is imbalanced, at least one of the following techniques may be used: class distribution analysis, imbalance ratio, Gini-Index, and entropy.

In embodiments, the training dataset 200 may comprise, but is not limited to ImageNet, KITTI, Microsoft Common Objects in Context (COCO), BDD100k, CODA, nuScenes, CIFAR-10, CIFAR-100, MNIST, Kinetics-700, and/or Pascal VOC dataset(s). The training dataset may be a custom dataset and/or a proprietary dataset. The training dataset my be a ground-truth dataset or an unlabeled dataset. In embodiments, the training dataset 200 may be used in training a machine learning model for a computer vision task and/or for at least one of the following tasks: natural language processing task, speech recognition task, recommendation system task, anomaly detection task, predictive maintenance task, healthcare (or healthcare diagnostic) task, robotics (or automation) task, or game playing task.

In embodiments, the computer vision task may comprise, but is not limited to, object detection, object recognition, object classification, object tracking, object segmentation, object counting, object retrieval, pose estimation, anomaly detection, and/or 3D object reconstruction.

Step 110 of method 100 comprises obtaining information on a frequency of occurrence of object classes in the training dataset. Obtaining said information may comprise using at least one of the following techniques: class distribution analysis, imbalance ratio, Gini-Index, and entropy. The frequency of occurrence of objects classes may be a count of the number of objects (e.g. also called instances) in each class.

The information on the frequency of occurrence of said object classes, may, for instance, indicate that one or more object classes corresponding to the cut out objects 230, 240 have a lower (or much lower) frequency of occurrence than other object classes in the training dataset. Said information may indicate that one or more object classes are underrepresented, or less prevalent or sparsely populated or have fewer instances. Said information may indicate that one or more object classes have significantly more objects than one or more other object classes. The method 100 continues at step 120 by cutting out, based on the frequency of occurrence, objects 230, 240 from sample images 210, 220 obtained from, or copied from, the training dataset 200. The objects may be associated with object classes in the training dataset.

Cutting out objects from said sample images may comprise cutting out objects identified by ground truth labels 245 corresponding to or associated with said objects. In embodiments, only some of the object cut out from the sample images are identified by ground truth labels 245 corresponding to or associated with said objects. The remaining objects may be identified using any object detection method.

In embodiments, cutting out said objects 230, 240 may comprise extracting, isolating, segmenting, snipping, detaching, trimming, and/or cropping out objects from sample images 210, 220. The objects cut out from the sample images may or may not be associated with respective object classes of the training dataset. Said objects may be everyday objects such as people, animals, trees, vehicles, airplanes, and/or traffic signs. Said objects may be scenes of environments such as indoor scenes (e.g. hallways, theaters, living rooms) and outdoor scenes (e.g. streets, crossroads, pedestrian crossings, parks, schools, universities, and/or buildings). Said objects may be faces or objects related to X-rays and MRI scans. Said objects may be associated with a traffic environment (e.g. road infrastructure objects, traffic participants, pedestrians, bicycles, cars, trucks, traffic lights, stop signs, road markings, construction cones, traffic cones, traffic barriers, animals, motorcycles, buses, cyclists, cyclist lanes, lane markings, road signs, potholes, debris, parked vehicles, emergency vehicles, drones, construction equipment, traffic cones, fire hydrants, mailboxes, streetlights, benches, trash cans, bus stops, crosswalks, railroad crossings, tunnels, bridges, overpasses, underpasses, and/or toll booths).

The method step 130 comprises generating, based on the frequency of occurrence, training data comprising a collage 250 of at least two of the cut out objects 230, 240. In embodiments, generating, based on the frequency of occurrence, the training data comprising said collage of the at least two of the objects 230, 240, may comprise generating the collage 250 by identifying at least two objects (cut out from the sample images 210, 220) that are respectively associated with object classes having a low frequency of occurrence (or a frequency of occurrence lower than that of other classes associated with the training dataset), and generating the collage of the at least two objects.

For instance, generating the collage 250 of at least two of the cut out objects 230, 240 may comprise generating the collage manually, for instance by placing the objects at different non-overlapping locations in one image. Generating the collage of the at least two of the objects may comprise generating the collage using at least one of the following: grid-based layout, mosaic layout, random layout, tree-based layout, balance-aware grid layout, Voroni diagram, and SoftCollage.

In embodiments, the collage 250 of the at least two of the objects 230, 240, may comprise modified (e.g. augmented: e.g. at least one of: flipped, scaling up, rotated, noise added) copies of the at least two of the objects 230, 240. This modification may mean that new information related to the at the at least two of the objects exist now in the collage. This may lead to the effect that the machine learning model is not trained on the same repeated information related to single objects, but is rather trained on new information about the at least two combined and/or modified objects in the collage. This may lead to an improved generalization and prediction reliability and accuracy of the machine learning model, especially for underrepresented objects or object classes.

The training data may further comprise respective ground truth labels corresponding to the at least two of the objects or the modified copies of the at least two objects in the collage.

In embodiments, method 100 may further comprise adding the training data that comprises the collage 250 to the training dataset or to another training dataset, thereby obtaining an updated dataset. For instance, the other training dataset may be an imbalanced training dataset. The other training dataset may be similar or different from the training dataset from which the sample images are obtained. The other training dataset may have a similar or corresponding or equivalent or identical frequency of occurrence of object classes as the training dataset (from which the sample images are obtained). The collage 250 may be added as a new image 250 to the training dataset 200 or the other training dataset. The new image 250 may be of the same size of the existing images in the training dataset 200 or the other training dataset. The new image 250 may have the same aspect ratio and/or resolution of the training images or sample images 210, 220 in the training dataset or the other training dataset. The new image along with the existing images in the training dataset or in the other training dataset, and/or the corresponding ground truth labels, may be or may constitute the new or the updated dataset. For instance, when more than one collage are generated, each collage may be added as a new image to the training dataset or to the other training dataset, thereby e.g. forming a new or updated dataset. The machine learning model may be trained on the new or updated dataset.

In embodiments, generating, based on the frequency of occurrence, the training data that comprises the collage may include generating the collage such that a class frequency imbalance is reduced in the updated dataset. For instance, generating, based on the frequency of occurrence, the training data that comprises the collage may include generating the collage such that an imbalance towards rare or underrepresented object classes in the collage compensates the imbalance towards frequent or overrepresented object classes in the training dataset from which the sample images are obtained, or in the other training dataset described above.

For instance, generating, based on the frequency of occurrence, the training data comprising said collage 250 may comprise generating the collage 250 such that a class frequency imbalance in the training dataset that includes the collage is reduced, e.g. in comparison with the class frequency imbalance in the training dataset that does not include the collage.

For example, the class frequency imbalance may be an imbalance in the frequency of occurrence of one or more object classes, for instance, with respect to other object classes in or associated with the training dataset. The class frequency imbalance may be an imbalance in the frequency of occurrence of one or more objects (associated with respective object classes in the training dataset 200) with respect to one or more other objects (associated with other respective object classes in the training dataset 200).

For example, the class frequency imbalance may indicate that one or more object classes are underrepresented, or less prevalent or sparsely populated or have fewer instances in the images of the training dataset 200. The information on the frequency of occurrence of object classes may indicate that one or more object classes are associated with a significantly higher number of objects than one or more other object classes in the training dataset 200.

The proposed approach may be applied for multiple collages. So, method step 130 may comprise generating, based on the frequency of occurrence, at least one collage 250 comprising at least two of the objects 230, 240, or a plurality of collages 250 comprising at least two of the objects 230, 240. For instance, the number of collages 250 to be generated may be based on the frequency of occurrence of objects classes. For instance, if one collage 250 is not enough to balance said class frequency imbalance described above, additional collages 250 are generated, for instance, such that the frequency of occurrence of every object class in the training dataset 200 or in the other training dataset is balanced (or equal or similar or equivalent or corresponding) among all object classes in the training dataset 200 or in the other training dataset described above.

The data obtainable by the method 100 may be used for training a machine learning model for a computer vision task. The data may be the generated training data comprising the collage. The data may be the updated dataset, e.g., after adding the collage, or at least one collage, as new image (s) (e.g. along with corresponding ground truth labels) to the training dataset. The data obtained by said method may be the training dataset including the generated training data. Hence, the data obtained by said method may be a balanced dataset or a balanced data structure (that is the dataset or data structure obtained after adding the training data obtained by method 100 to the training dataset) where the different object classes are correspondingly (or equally) represented in terms of their respective frequency of occurrence in the training dataset, thereby enabling the evaluation of the model's performance on all classes fairly and preventing the model from becoming overly sensitive to the majority class while ignoring minority classes.

The training data and/or the updated dataset provided by method 100 may be used, in a training method, to train a machine learning model for a computer vision task. The machine learning model, to be trained by the training method, may be any one of the models described above in relation to method 100. the machine learning model may be trained for a computer vision task and/or for at least one of the following tasks: natural language processing task, speech recognition task, recommendation system task, anomaly detection task, predictive maintenance task, healthcare (or healthcare diagnostic) task, robotics (or automation) task, or game playing task.

For example, training the machine learning model based on the training data may comprise training the machine learning model using the updated dataset (e.g., after adding the training data obtained by method 100 and comprising a collage, or at least one collage, as new image (s) (e.g. along with corresponding ground truth labels) to the training dataset). Given that the training data and/or dataset provided by method 100 is balanced, the machine learning model obtainable by said training method (e.g. after the training phase) reduces overfitting, underfitting, and bias, and is characterized by an improved generalization and consistent predictions. During the inference phase, said trained machine learning model is characterized by an improved reliability and accuracy when used to perform the computer vision task, e.g. improved reliability and accuracy of object detection, recognition, classification and/or tracking.

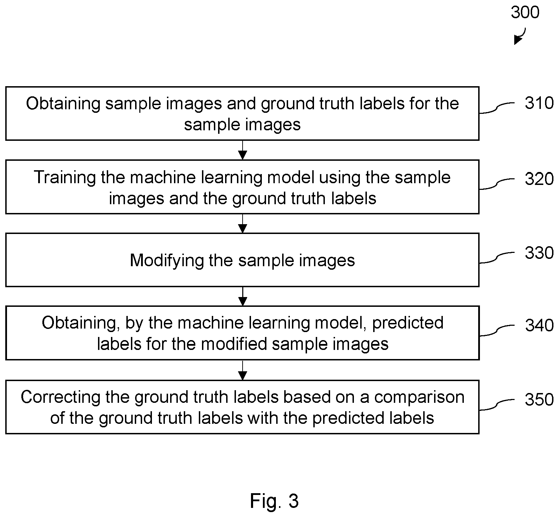

Fig. 3 shows a flow chart schematically illustrating an embodiment of a computer-implemented method 300 for correcting ground truth labels for training a machine learning model for a computer vision task.

The ground truth labels may correspond to a training dataset 200. The training dataset and the computer vision task may be defined in accordance with the above-mentioned definitions, examples and embodiments related to the training dataset and computer vision task associated with method 100.

In embodiments, the training dataset may be used in training a machine learning model for a computer vision task and/or for at least one of the following tasks: natural language processing task, speech recognition task, recommendation system task, anomaly detection task, predictive maintenance task, healthcare (or healthcare diagnostic) task, robotics (or automation) task, or game playing task. The method 300 begins at step 310 by obtaining sample images 210, 220 and ground truth labels 245 for the sample images.

In embodiments, the sample images and the ground truth labels may be associated with a training dataset. A sample image may comprise at least one object. The objects may or may not be associated with respective object classes of the training dataset. Said objects may be everyday objects such as people, animals, trees, vehicles, airplanes, and/or traffic signs. Said objects may be scenes of environments such as indoor scenes (e.g. hallways, theaters, living rooms) and outdoor scenes (e.g. streets, crossroads, pedestrian crossings, parks, schools, universities, and/or buildings). Said objects may be faces or objects related to X-rays and MRI scans. Said objects may be associated with a traffic environment (e.g. road infrastructure objects, traffic participants, pedestrians, bicycles, cars, trucks, traffic lights, stop signs, road markings, construction cones, traffic cones, traffic barriers, animals, motorcycles, buses, cyclists, cyclist lanes, lane markings, road signs, potholes, debris, parked vehicles, emergency vehicles, drones, construction equipment, traffic cones, fire hydrants, mailboxes, streetlights, benches, trash cans, bus stops, crosswalks, railroad crossings, tunnels, bridges, overpasses, underpasses, and/or toll booths).

The method step 320 comprises training the machine learning model using the sample images and the ground truth labels.

In embodiments, training the machine learning model may be done using any training platform known to the skilled person, or using at least one of the following or related platforms: NVIDIA DGX Systems, Google Cloud TPU, AWS EC2 P3 Instances, Azure NDv2 Series, and IBM Power Systems AC922. Training the machine learning model may done using any training software known to the skilled person or using at least one of the following or related software tools: TensorFlow, PyTorch, Keras, Scikit-learn, and MATLAB.

The method step 330 comprises modifying the sample images.

In embodiments, modifying the sample images may comprise augmenting the sample images. Augmenting the sample images may comprise at least one of: flipping, rotation, scaling, translation, cropping, brightness adjustment, adding noise, color adjustments, cutout/erasing, and perspective transformations. In embodiments, modifying the sample images may comprise overlaying the sample images with one or more objects. The one or more objects may be associated with underrepresented object classes, or with overrepresented object classes.

The method step 340 comprises obtaining, by the machine learning model, predicted labels for the modified sample images.

Alternatively, method step 340 may comprise obtaining, by the machine learning model, predicted labels for the sample images and the modified sample images.

In embodiments, predicted labels may be at least one of: class labels, bounding boxes, segmentation masks, keypoints, and regression values.

The method step 350 comprises correcting the ground truth labels based on a comparison of the ground truth labels with the predicted labels.

By modifying the sample images, for instance using image augmentation, and by obtaining predicted labels for the modified sample images, for instance using the machine learning model during inference-time to obtain respective predicted labels for the modified sample images, erroneous, missing or noisy ground truth labels can be identified and corrected based on the comparison between the ground truth labels and the predicted labels, thereby considerably minimizing the occurrence of erroneous, missing and noisy labels in the training data, hence improving the reliability and accuracy of the training data, and also improving the reliability and accuracy of the performance of the machine learning model trained using said training data.

For instance, if there is a predicted label that the model manages to predict consistently, despite not having seen the modification (i.e. not having been trained on the modified sample images), and if said predicted label has no intersection with (or does not match) any one of the ground truth labels, then it is with high confidence a missing label and should be added to the ground truth labels, thereby improving the accuracy and reliability of the training data. Accordingly, the ground truth labels can be corrected (e.g. extended) based on a comparison of the ground truth labels with the predicted labels.

Consistent prediction by the model means, for instance, that when the sample image is modified (e.g. augmented using flipping, scaling, and/or adding noise) repeatedly and/or differently, the model keeps predicting the labels repeatedly at the same location that is measured by a metric (e.g. intersection of union (IOU)) that is above a predefined threshold (e.g. IOU bigger than 0.5 or 0.6 or 0.7 or 0.8 or 0.9). For instance, if there is a ground truth label that has no intersection with any one of the predicted labels, it is with high probability a false label or an erroneous label. For the example of one stage anchor-based object detector, the predicted labels cover the whole image. These predicted labels may be assigned a confidence score by the detector. Then, the labels may be filtered based on said confidence score. If, for instance, there is no intersection with any of the labels despite a low confidence score, then there is a high probability that the ground truth label is erroneous. Accordingly, said erroneous label can be removed from the training data, thereby improving the accuracy and reliability of the training data.

For instance, if there is a predicted label assigned to a ground truth label, albite with low intersection of union with the ground-truth label, and albite the modified (e.g. augmented) sample images, the model predicts consistently (see example of consistent prediction above), then the ground truth label is a noisy label, and the predicted label is most probably more accurate than the manual or ground truth label. Accordingly, said predicted label can be used to substitute said ground truth label, thereby improving the accuracy and reliability of the training data.

In embodiments, correcting the ground truth labels based on a comparison of the ground truth labels with the predicted labels may comprise the steps of comparing, based on a consistency metric, the predicted labels corresponding to a same object across the modified images with each other; selecting, based on the consistency metric, a predicted label, corresponding to the same object, to be compared to a ground truth label corresponding to the same object; and correcting the ground truth label based on a comparison of the ground truth label with the selected predicted label. For example, the consistency metric may be intersection of union (IOU) (e.g. IOU of the predicted labels corresponding to said same object across the modified images). For instance, selecting, based on the consistency metric, a predicted label corresponding to the same object, may comprise selecting the predicted label corresponding to the same object if it has an IOU bigger than a predefined threshold. For instance, the predefined threshold may be equal to 0.7 or 0.8 or 0.9. For instance, the comparison of the ground truth label with the select predicted label may be based on the IOU.

For instance, if said selected predicted label has no intersection with (or does not match) any one of the ground truth labels, it may be with high confidence a missing ground truth label and/or it may be added to the ground truth labels. Wherein the intersection may be measured using IOU.

For instance, if there is a ground truth label among all ground truth labels that has no intersection with any one of the selected predicted labels of all objects corresponding to the object classes of the training dataset, it may be with high probability a false label or an erroneous label and/or it may be removed from the ground truth labels of the training dataset. Wherein the intersection may be measured using IOU.

For instance, if there is a selected predicted label assigned (or corresponding or matching) to a ground truth label, albite with low intersection of union with the ground truth label, then the ground truth label may be a noisy label and/or the selected predicted label may be with high probability more accurate than the ground truth label and/or the selected label may substitute said ground truth label.

The ground truth labels obtainable by the method 300 improve the accuracy and reliability of the training data, since they minimize the occurrence of false, missing and noisy ground truth labels, as previously explained. Accordingly, said ground truth labels improve the accuracy and reliability of the training data and/or training dataset.

The ground truth labels provided by method 300 may be used, in a training method, to train a machine learning model for a computer vision task. The training method comprises: obtaining training data including ground truth labels provided by method 300, and training the machine learning model based on the training data. The machine learning model (to be trained by the training method) may be any one of the models described above in relation to method 100. The machine learning model may be trained for a computer vision task and/or for at least one of the following tasks: natural language processing task, speech recognition task, recommendation system task, anomaly detection task, predictive maintenance task, healthcare (or healthcare diagnostic) task, robotics (or automation) task, or game playing task. For example, training the machine learning model based on the training data may comprise training the machine learning model using the updated training dataset (e.g., the training dataset with corrected ground truth labels provided by method 300). Since the ground truth labels provided by method 300 are corrected (e.g. contain less erroneous, missing and noisy labels), the training data becomes more reliable and accurate, and the machine learning model trained using said training data is more effective, reliable, and accurate.

Strong class imbalance in real-world data leads to a non-uniform distribution of classes across the batches. This leads to peaks in the gradient updates as a rare class may appear in only one batch, resulting in that the model will be biased and will not be focusing on the rare class. Therefore, it there is need to improve the generalization of the model across both common and rare classes by exposing it to a balanced and more diverse set of training data and conditions.

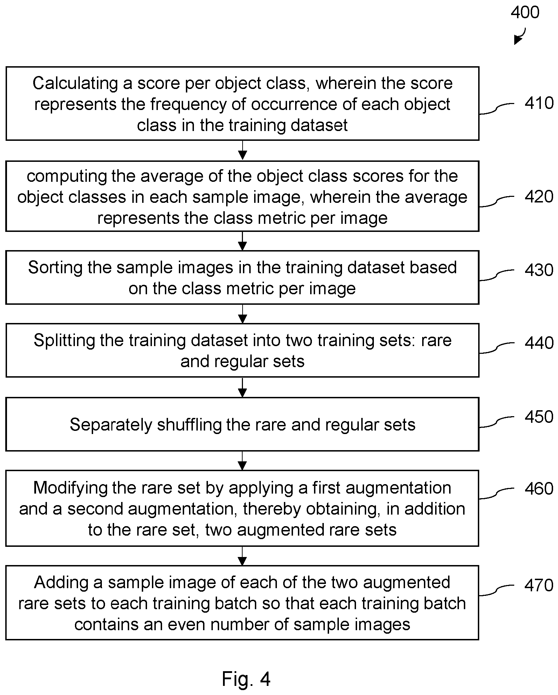

Fig. 4 shows a flow chart schematically illustrating an embodiment of a computer-implemented method 400 for generating a balanced training dataset used in training a machine learning model for a computer vision task.

The method 400 starts at steps 410 by calculating a score per object class, wherein the score represents the frequency of occurrence of each object class in the training dataset.

The method step 420 comprises computing the average of the object class scores for the object classes in each sample image, wherein said average may represent the class metric per image.

The method step 430 comprises sorting the sample images in the training dataset based on the class metric per image.

The method step 440 comprises splitting the training dataset into two training sets: rare and regular sets, wherein the splitting is defined by taking the top-k sample images as rare image samples, where k is the number of batches per epoch during training, wherein the rare set may comprise rare sample images consisting mainly of underrepresented object classes, wherein underrepresented object classes may be object classes with a lower frequency of occurrence compared to other object classes in the training dataset,
wherein each batch may comprise at least one rare sample image while the remaining images per batch are regular sample images,

The method step 450 comprises separately shuffling the rare and regular sets.

The method step 460 comprises modifying the rare set by applying a first augmentation and a second augmentation, thereby obtaining, in addition to the rare set, two augmented rare sets,

The method step 470 comprises adding a sample image of each of the two augmented rare sets to each batch so that each batch contains an even number of sample images,

The method 400 may further contain step 480 that comprises training the machine learning model using said batches.

Accordingly, method 400 provides an improved and more efficient training dataset, and a training strategy that alleviates the drawback of having underrepresented classes that bias the performance of the model. This results in a more accurate, robust and reliable model that improves generalization, and that improves object detection, recognition and classification across all object classes.

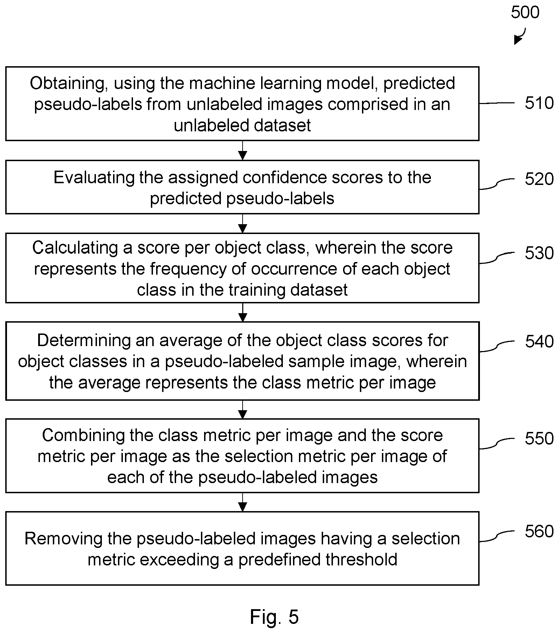

Fig. 5 shows a flow chart schematically illustrating an embodiment of a computer-implemented method 500 for filtering pseudo-labels used in a training dataset used in training a machine learning model for a computer vision task.

Method 500 starts at step 510 by obtaining, using the machine learning model, predicted pseudo-labels from unlabeled images comprised in an unlabeled dataset, wherein the machine learning model assigns confidence scores to each predicted pseudo-label.

Step 520 comprises evaluating the assigned confidence scores to the predicted pseudo-labels, wherein the evaluating comprises determining the ratio of the number of predicted pseudo-labels having high confidence scores to the number of predicted pseudo-labels having low confidence scores, wherein the ratio may represent the score metric per image, wherein high confidence scores may be in the range, e.g. [0.4-0.9], and low confidence scores may be in the range, e.g. [0-0.4[, as may be defined by the confidence threshold of the machine learning model.

Step 530 comprises calculating a score per object class, wherein the score represents the frequency of occurrence of each object class in the training dataset. Step 540 comprises determining an average of the object class scores for object classes in a pseudo-labeled sample image, wherein the average may represent the class metric per image.

Step 550 comprises combining the class metric per image and the score metric per image as the selection metric per image of each of the pseudo-labeled images.

Step 560 comprises removing the pseudo-labeled images having a selection metric exceeding a predefined threshold, wherein the predefined threshold is empirically determined, thereby resulting in a less-noisy training dataset, with less missing pseud-labels, and less erroneous pseudo-labels, resulting in a machine learning model with an improved performance when training using said pseudo-labels.

It may be asserted that the primary indicator of missing detections in an image i is the distribution of the scores in that image i. Therefore, the number of detections at different confidence threshold $\delta_s$ values indicates the confidence of the model in that image i and, consequently, the likelihood of detections being missed. Given

a confidence threshold $\delta_s$, the number of detections at that threshold is denoted as $n_i(\delta_s)$. The selection score for a sample image s is calculated as:

$$S_i(\delta_s) = n_i(\delta_s) / n_i(0.1)$$

where $n_i(0.1)$ is the number of detections at a low threshold (e.g., 0.1), used as a reference for the total number of detections.

Due to class imbalance, the presence of rare objects in the image significantly impacts the model, as these rare classes still provide a positive learning signal. To address this, A regularizing class metric may be introduced. To maintain a metric with a range of [0,1], we calculate $C_i$ as follows:

$$C_i = (1/j) \sum_{k=1}^{j} (1 - f_k / n_i)$$

where j is the number of predicted classes in image $x_i$, $f_k$ is the frequency of class k in the dataset, and $n_i$ is the total number of predictions per image. $C_i$ increases as the objects are less frequent. Accordingly, $C_i$ provides an overall measure of class distribution in the image, helping to identify if the image has a balanced representation of classes. Hence, high values of $C_i$ reflected an image that contains rare or underrepresented objects.

The overall missing detection (MD) score $D_i$ for an image i is then given by:

$$D_i(\delta_s, \beta) = (1 - \beta) \cdot S_i(\delta_s) + \beta \cdot C_i$$

where $\beta$ is a weighting factor for the class metric. Pseudo-labels from images with low $D_i$ scores are filtered out, improving the quality of the training data.

In the present disclosure, any feature described in an embodiment, example, and/or method (e.g. method 100, 300, 400, 500), may be combined with any feature of another embodiment, example, and/or method (e.g. method 100, 300, 400, 500), unless otherwise specified.

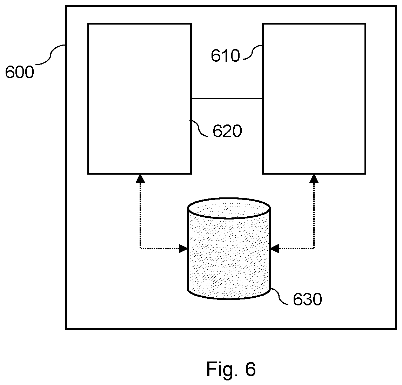

Fig. 6 schematically illustrates a block diagram of an embodiment of an apparatus 600 comprising one or more interfaces 610 for communication and one or more processors or data processing circuits 620 configured to execute any one of the methods described herein.

In embodiments, the apparatus may further comprise a memory or a storage medium 630. A storage medium 630 (or a data carrier, or a computer-readable data carrier, or a computer-readable medium) may comprise, stored thereon, a computer program or computer-executable instructions for performing one of the methods described herein when it is performed by one or more processors 620. The processors 620 may communicate with the storage medium 630 directly and/or via the one or more interfaces 610.

In embodiments, the one or more interfaces 610 may comprise wired and/or wireless interfaces for transmitting and/or receiving communication signals in connection with the execution of the proposed concept. In practice, the interfaces, e.g., comprise pins, wires, antennas, and/or the like. As well, the interfaces may comprise means for (analog and/or digital) signal or data processing in connection with the communication, e.g., filters, samples, analog-to-digital converters, signal acquisition and/or reconstruction means as well as signal amplifiers, compressors and/or any encryption/decryption means.

The data processing circuit 620 may correspond to or comprise any type of programable hardware. So, examples of the data processing circuit 620, e.g., comprise a memory, microcontroller, field programmable gate arrays, one or more central and/or graphical processing units. To execute the proposed method, the data processing circuit 620 may be configured to access or retrieve an appropriate computer program for the execution of the proposed method from a memory of the data processing circuit 620 or a separate memory which is communicatively coupled to the data processing circuit 620.

Some or all of the method steps described above with regard to Figures 1-5 may be implemented by a computer in that they are executed by (or using) a processor, a microprocessor, an electronic circuit, or the data processing circuit 620. For example, the implementation can be performed using a non-transitory storage medium such as a computer-readable storage medium or data carrier. Such computer-readable media include any media that can be accessed by either a general-purpose or a specialized computer system.

Generally, the methods described herein can be implemented as a computer program product with a program code or computer-executable instructions, the program code or computer-executable instructions being operative for performing one of the methods when the computer program products run on a computer. The program code or the computer-executable instructions may, for example, be stored on the computer-readable storage medium 630.

**Claims**

1. A method (300) for correcting ground truth labels used in training a machine learning model for a computer vision task, the method comprising:

    obtaining (310) sample images and ground truth labels for the sample images;
    training (320) the machine learning model using the sample images and the ground truth labels;
    modifying (330) the sample images;
    obtaining (340), by the machine learning model, predicted labels for the modified sample images;
    correcting (350) the ground truth labels based on a comparison of the ground truth labels with the predicted labels.

2. The method of claim 1, wherein the ground truth and predicted labels are indicative of a position and/or dimensions, an absence, and/or presence of an object, wherein the method further comprises obtaining a deviation of the ground truth labels from the predicted labels, and wherein correcting the ground truth labels comprises correcting the ground truth labels based on the deviation.

3. Ground truth labels obtainable by a method of claim 1 or 2.

4. A training method for training a machine learning model for a computer vision task, the training method comprising:

    obtaining training data including ground truth labels of claim 3; and
    training the machine learning model based on the training data.

5. A machine learning model obtainable by a training method of claim 4.

6. A computer program comprising instructions which, when the computer program is executed by a computer, cause the computer to carry out the method of any one of the claims 1, 2 and/or 4, and/or provide ground truth labels of claim 3, and/or a machine learning model of claim 5.

7. A computer-readable data carrier having stored thereon the computer program of claim 6.

8. An apparatus comprising:

    one or more interfaces for communication; and
    a data processing circuit configured to carry out the method of any one of the claims 1, 2 and/or 4, and/or provide ground truth labels of claim 3, and/or a machine learning model of claim 5.

9. Use of the ground truth labels of claim 3.

10. Use of the machine learning model of claim 5.

100

| Obtaining information on a frequency of occurrence of object classes in the training dataset | 110 |

| Cutting out, based on the frequency of occurrence, objects from sample images taken from the training dataset | 120 |

| Generating, based on the frequency of occurrence, training data comprising a collage of at least two of the objects | 130 |

Fig. 1

Fig. 2

300

Obtaining sample images and ground truth labels for the sample images — 310

Training the machine learning model using the sample images and the ground truth labels — 320

Modifying the sample images — 330

Obtaining, by the machine learning model, predicted labels for the modified sample images — 340

Correcting the ground truth labels based on a comparison of the ground truth labels with the predicted labels — 350

Fig. 3

400

Calculating a score per object class, wherein the score represents the frequency of occurrence of each object class in the training dataset — 410

computing the average of the object class scores for the object classes in each sample image, wherein the average represents the class metric per image — 420

Sorting the sample images in the training dataset based on the class metric per image — 430

Splitting the training dataset into two training sets: rare and regular sets — 440

Separately shuffling the rare and regular sets — 450

Modifying the rare set by applying a first augmentation and a second augmentation, thereby obtaining, in addition to the rare set, two augmented rare sets — 460

Adding a sample image of each of the two augmented rare sets to each training batch so that each training batch contains an even number of sample images — 470

Fig. 4

500

Obtaining, using the machine learning model, predicted pseudo-labels from unlabeled images comprised in an unlabeled dataset — 510

Evaluating the assigned confidence scores to the predicted pseudo-labels — 520

Calculating a score per object class, wherein the score represents the frequency of occurrence of each object class in the training dataset — 530

Determining an average of the object class scores for object classes in a pseudo-labeled sample image, wherein the average represents the class metric per image — 540

Combining the class metric per image and the score metric per image as the selection metric per image of each of the pseudo-labeled images — 550

Removing the pseudo-labeled images having a selection metric exceeding a predefined threshold — 560

Fig. 5

Fig. 6

Europäisches
Patentamt
European
Patent Office
Office européen
des brevets

## EUROPEAN SEARCH REPORT

**Application Number**

EP 24 21 5379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNNAN LI ET AL: "DivideMix: Learning with Noisy Labels as Semi-supervised Learning", ARXIV.ORG, CORNELL UNIVERSITY LIBRARY, 201 OLIN LIBRARY CORNELL UNIVERSITY ITHACA, NY 14853, 18 February 2020 (2020-02-18), XP081602074, * page 1 - page 6 * | 1-10 | INV. G06N20/00 |
| A | JUNNAN LI ET AL: "Towards Noise-resistant Object Detection with Noisy Annotations", ARXIV.ORG, CORNELL UNIVERSITY LIBRARY, 201 OLIN LIBRARY CORNELL UNIVERSITY ITHACA, NY 14853, 3 March 2020 (2020-03-03), XP081613373, * page 1 - page 8 * | 1-10 | |
| A | HENGDUO LI ET AL: "Rethinking Pseudo Labels for Semi-Supervised Object Detection", ARXIV.ORG, CORNELL UNIVERSITY LIBRARY, 201 OLIN LIBRARY CORNELL UNIVERSITY ITHACA, NY 14853, 1 June 2021 (2021-06-01), XP081983244, * page 1 - page 5 * | 1-10 | **TECHNICAL FIELDS SEARCHED (IPC)**<br><br>G06N |

The present search report has been drawn up for all claims

| Place of search | Date of completion of the search | Examiner |
|---|---|---|
| The Hague | 20 May 2025 | Bohn, Patrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

3